# EUROPEAN PATENT APPLICATION

(11) **EP 1 326 324 A1**
(43) Date of publication of application: **09.07.2003**
(21) Application number: 02290029.4
(22) Date of filing: 08.01.2002
(51) Int. Cl.: H02M 7/12

(54) **Protection circuit for protecting a switching device with an inductive load**

(71) Applicant: STMicroelectronics N.V., 1077 XX Amsterdam (NL)
(72) Inventor: Appeltans, Koen Emiel Jozef, 3800 Sint-Truiden (BE); van der Voorde, Lucas Emiel elie, 2830 Willebroek (BE)
(74) Representative: Van Malderen, Joelle

(57) **Abstract**

The present invention relates to a protection device for protecting a switching device that is able to control a current through an inductive load which is subject to a supply voltage by switching a first and a second terminal of the inductive load to the respective pole of the supply voltage. The switching device is under control of a switching control device. The switching control device operating based on a predetermined algorithm. The switching device additionally comprises flyback body-diodes. The protection device comprises a measuring part that is able to measure a voltage-level on a terminal of the load. Further there is a decision part DP that is able to make a decision for switching the first terminal of the load if the measured voltage-level exceeds the supply voltage to counteract the voltage level of the first terminal.The protection device additionally comprises an instructing part which is able to instruct the switching control device based on the decision for switching a first terminal of the load in order to limit the current through a body diode by counteracting the voltage over the load (M).

## Description

The present invention relates to a protection device for protecting a switching device (SD) adapted to control a current through an inductive load subject to a supply voltage as described in the preamble of claim 1 and the switching control device as described in the preamble of claim 7.

Such a device is already known in the art, e.g. *from "ST product sheet published at Internet site http:*//*us.st.com*/*stonline*/*profiles*/*powersupply*/*xindex.shtml"*. Therein, a switching device, called a full bridge switching device with fly-back protection consisting of power-switches is shown. The switching device is protected with diodes.

The power switches of the switching device switch a supply voltage to the motor in such a way that an inductive load, in the cited product sheet being a unipolar or bipolar stepper motor starts running and increases the applied shaft rotation by connecting a first terminal of this inductive load to a DC supply voltage and connecting a second terminal to Ground. The same principle scheme can be applied for DC motors, where the controlled torque can directly influence the motor speed.

It is further to be noticed that the applied shaft rotation torque to such a stepper motor as a function of the load current increases as long as a supply voltage is supplied, until resistive saturation occurs. To regulate the applied shaft rotation torque to a certain target level, the load current is regulated by connecting and disconnecting the inductive load - i.e the motor - to a Direct Current supply voltage on a regular, periodical, high frequency timebase in order to alternately increase the torque and subsequently decrease the torque in the same period, to keep the average torque under control in this switched-mode operation.

This regulation is for instance done by at reaching an upper current level in the stepper motor reducing the current through the inductive load, i.e. the stepper motor by controlling the switching device in such way that the second terminal of the load is decoupled from ground, causing the voltage at the second terminal to increase over the supply voltage (due to the inductive load), causing a fly-back current through a (protection) diode.

The power switches used in the prior art are often discrete components, i.e. not integrated in a chip. In case an integrated circuit is used, intrinsic technological protection is provided or possibly external Schottky diodes are used.

If the switching device is integrated in a chip, the body diodes of the switches can be turned ON during the "flyback phase". Turning ON these intrinsic body diodes creates substrate currents which can lead to disturbances or "latch-up". In case of latch-up, the circuit can be seen as equivalent to a thyristor structure that cannot be switched OFF and leads thereby to the destruction of the chip.

An object of the present invention is to provide a Protection circuit for protecting a switching device (SD) adapted to control a current through an inductive load subject to a supply voltage of the above known type but wherein the switching circuit is protected against destruction of components during the flyback phase.

According to the invention, this object is achieved by the method as described in claim 1 and the switching control device as described in claim 7.

Indeed by at first measuring a voltage-level at a terminal A, B of the load M and subsequently making a decision for switching the first terminal A, B of the load M to a pole of the supply voltage V_{DC}, V_{GND}, if the voltage-level measured exceeds the supply voltage V_{DC}, V_{GND}, in such way to counteract the voltage level of the first terminal A, B and that the intrinsic body diodes of the switching devices are not activated in forward mode. Consequential limiting or avoiding the motor-current to flyback or pass via the intrinsic body diodes of the switching devices and last the switching control device instructing to switch the terminal A,B of the load M in a way to limit said current through the body diodes by counteracting the induced voltage and hence reducing the voltage over said body diodes.

Another characterising embodiment of the present invention is described in claim 2.

The protection device PD may be implemented using a comparator-device.

A further characterising embodiment of the present invention is described in claim 3.

A protection device PD may be implemented using a using a microprocessor of the switching control device SCD.

A characterising embodiment of the present invention is described in claim 4.

The switching device SD may be a bridge switching configuration with fly-back protection while the predetermined algorithm consists of with high speed alternately coupling a terminal A, B of the load M to the supply voltage V_{DC}, V_{GND} and decoupling said terminal of said load M from said supply voltage V_{DC} V_{GND} in order to reduce the rotation torque of the motor, causing as a consequence of the inductive load a voltage at a terminal of the motor which exceeds the level of the supply voltage. After the decoupling of the terminal from the supply voltage V_{DC,} V_{GND} the terminal is coupled to an opposite pole of said supply voltage V_{DC,} V_{GND} to counteract the voltage-level of the terminal of said load to limit said current through a body diode by counteracting the voltage over said load (M).

A characterising feature of the present invention is described in claim 5.

By decoupling the terminal of said load M from the supply voltage V_{DC,} V_{GND} in a gradual way the voltage risetime or falltime at the terminal of the load M is substantially slower than compared to the situation wherein the decoupling is done immediately as the influence of the inductive load is reduced. In this way a reduced counteracting of the voltage level rise is required.

A characterising embodiment of the present invention is described in claim 6.

The protection device PD is an H-bridge switching configuration.

A characteristic feature of the present invention is described in claim 8.

The Switching Control device (SCD) is adapted to control said switching device (SD) to limit said current through said load device (M) gradually.

A characteristic embodimentof the present invention is described in claim 9.

The switching device and protection device are integrated in a packaged Integrated circuit.

A further characteristic embodimentof the present invention is described in claim 10. The Packaged Integrated circuit may additionally comprise a switching control device CD as previously described.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
FIG. 1 represents a block diagram of a switching device switching an inductive load under control of a protection device.
FIG. 2 is the scheme of a full bridge-switching device
FIG. 3 represents an alternative embodiment of a protected switching device additionally comprising a sense resistor

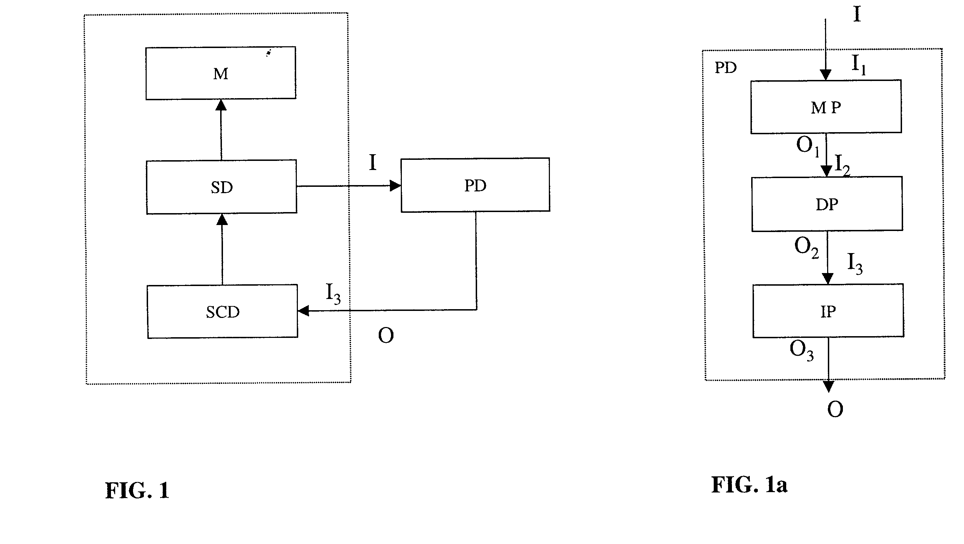

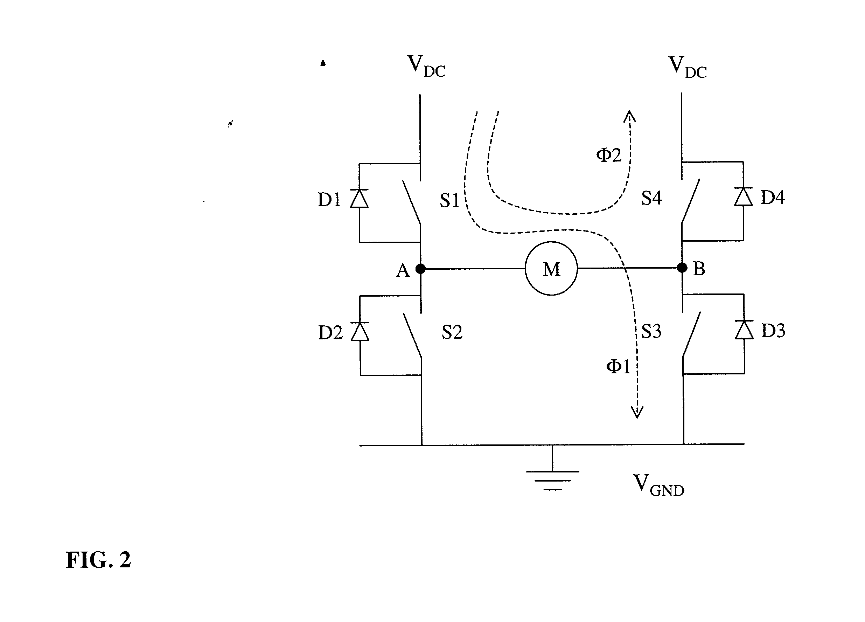

In the following paragraphs, referring to the drawings, an implementation of the method and the related devices according to the present invention will be described. In the first paragraph of this description the main elements of this network as presented in FIG. 1, FIG. la and FIG. 2 are described. In the second paragraph, all connections between the before mentioned network elements and described means are defined. Subsequently all relevant functional means of the mentioned network elements are described followed by a description of all interconnections. In the succeeding paragraph the actual execution of the method for session establishment is described.

An essential element of this embodiment is an inductive load M in this embodiment chosen to be a DC motor M for driving for instance the carriage of a printer. Further there is a switching device SD for coupling the inductive load M to a voltage supply in such way that the applied rotation torque to the motor M is regulated at a desired level. The switching device SD containing power-switches S1, S2, S3, S4 each protected by a body-diode D1, D2, D3, D4. The power-switches may be implemented using DMOS, CMOS, bipolar, BICMOS or IBGT transistors.

Additionally there is a control device CD that is able to control the switching of the switching device SD in such way that the applied torque to the motor is regulated by controlling the gate or base connector of each of the transistor power switches S1, S2, S3, S4. This control device CD may be implemented by using a microprocessor having outputs for controlling the transistor power switches S1, S2, S3, S4.

Finally there is a protection device PD that is adapted to protect the switching device SD that is adapted to control a current through an inductive load M subject to a supply voltage V_{DC,} V_{GND} by switching a first and a second terminal of said inductive load M to the respective pole of the supply voltage V_{DC,} V_{GND}. The protection device PD contains a measuring part MP, that is adapted to measure a voltage-level on for example terminal B of the stepper motor M and a decision part DP, for making a decision for switching the motor if the voltage at terminal B exceeds the voltage supply, here V_{DC}. Further the protection device comprises an instructing part IP for instructing the switching control device CD based on the decision for switching the DC motor M, to limit the current through said body diodes by counteracting the voltage over said load M.

The DC motor is coupled to the switching device in such way that the power-switches of the switching device SD are able to couple the voltage supply V_{DC}, V_{GND} to the respective connectors A, B of the DC motor.

The control device CD is coupled with its respective outputs to a gate or base-connector of each of the transistors implementing the power-switches.

Further, the protection device is coupled with an input-terminal I to a terminal A, B of the DC motor. The output O of the protection device PD is coupled to an input I₄ of the control device CD.

Input I is an input of the protection device PD and is at the same time an input-terminal I₁ of the measuring part MP. The measuring part MP has an output-terminal O₁ which is coupled to an input-terminal I₂ of the decision part DP. The decision part in its turn is coupled with an output-terminal O₂ to an input-terminal I₃ of the instructing part IP. The output-terminal O₃ of the instructing part is at he same time an output O of the protection device PD.

The switching device of FIG. 2 consists of four power switches S1, S2, S3, S4 for switching the connector terminals A, B of motor M between de poles of the voltage supply V_{DC}, V_{GND}.

The switching device comprises a first power-switch 51 couples the V_{DC} voltage supply pole to connector terminal A of the motor M. Further there is a second power-switch S2 coupling the V_{GND} voltage supply pole to connector terminal A of the motor M.

The switching device additionally comprises a third power-switch S3 coupling the V_{GND} voltage supply pole to connector terminal B of the motor M and a fourth power-switch S4 coupling the V_{DC} voltage supply pole to connector terminal B of the motor M.

Each of the power-switches is protected by a diode D1, D2, D3, D4 by coupling each of these diodes in parallel over the respective power-switch S1, S2, S3, S4.

In order to explain the operation of the operation of the present invention it is assumed that power-switch S2 is open and power-switch S1 is closed in this way coupling the first connector A to the supply voltage V_{DC} pole. In is further assumed that switch S3 is closed, coupling connector B to supply voltage V_{GND}. In this way the DC motor starts running and increases the applied shaft rotation. (Phase ϑ₁ ) The controlled torque can directly influence the motor speed. It is further to be noticed that the applied shaft rotation torque to such a DC motor as a function of the load current increases as long as a supply voltage is supplied. To regulate the applied shaft rotation torque to result in a certain target rotation level, the load current is regulated by connecting and disconnecting the DC motor - to a Direct Current supply voltage on a regular, periodical, high frequency timebase in order to alternately increase the torque and subsequently decrease the torque in the same period, to keep the average torqwe under control in this switch-mode operation.

Hence at reaching the predetermined upper rotation level, switch S3 is opened under control of the control device. The opening of Switch S3 may be performed based on a measured rotation speed or even after expiring of a certain time interval wherein the motor is able to reach a certain rotation speed.

By opening the Switch S3, and decoupling terminal B from ground V_{GND}, the voltage at terminal B due to the inductive load starts increasing rising over the supply voltage till the voltage-drop of diode D4 exceeds a certain value (typically 0.7V for a junction diode ) and starts conducting leading a fly-back current through the diode.

To avoid this situation, the measuring part MP of the protection device measures the

voltage-level on the terminal B of the DC motor and passes the value of the voltage-level to the decision part DP. The decision part DP compares the measured voltage level with a pre-stored threshold-value, here being the level of voltage supply V_{DC}. At the moment the measured value reaches the threshold value V_{DC}, the decision part decides to counteract the voltage level of terminal B by handing over the decision to 'close switch S4 and coupling terminal B of the DC motor direct to the voltage supply V_{DC}' to the instructing part IP in order to trigger the control device CD to open switch S4.

The switching control device then closes switch S4, coupling terminal B of the DC motor direct to the voltage supply V_{DC} (phase ϑ₂ ) and as a consequence limiting or avoiding the motor-current to flyback or pass via the intrinsic body diodes of the switching devices.

In case of the gradual way, the decoupling the terminal of the DC motor M from the supply voltage (V_{DC}, V_{GND}) is done gradually, closing the switch slowly. In this way the induced voltage is smaller. When that terminal is fully decoupled from the supply voltage V_{GND} the terminal is coupled to an opposite pole of said supply voltage V_{DC}, to counteract said voltage-level of said terminal of said load to limit said current through a body diode by counteracting the induced voltage over the motor M.

For instance, if the inductive nature of the motorload is causing the terminal B to change fastly from a low level near ground to a high level (V_{DC} + V_{bodydiode} ), being finally clamped by the body diode of switch S1 , the invention relates to the following cases :
- in case VB > VDC : S4 is closed as fast as possible...
- in case VB > VDC : S23 is controlled in such a way that VB < (V_{DC} + V_{bodydiode} .)
   (this mode is referred to as gradual/analog control)
- in case VB> VDC : S4 is closed as fast as possible AND S3 is controlled in such a way that VB < . (V_{DC} + V_{bodydiode} .)
   (this mode is referred to as direct on/off or digital control)

It is to be noticed that the protection device is implemented using a comparator with a first input coupled to a terminal of the DC motor and with a second input coupled to a reference voltage, voltage supply V_{DC} in this case. The output of this comparator then is coupled to an input of the switching control device CD.

It is further to be noticed that the inductive load might be a DC motor or the phase of a stepper motor. For instance a (bipolar) two-phase stepper motor requires a second full bridge switching device as presented in Fig. 2 in order to control the rotation of such a motor in a step by step way.

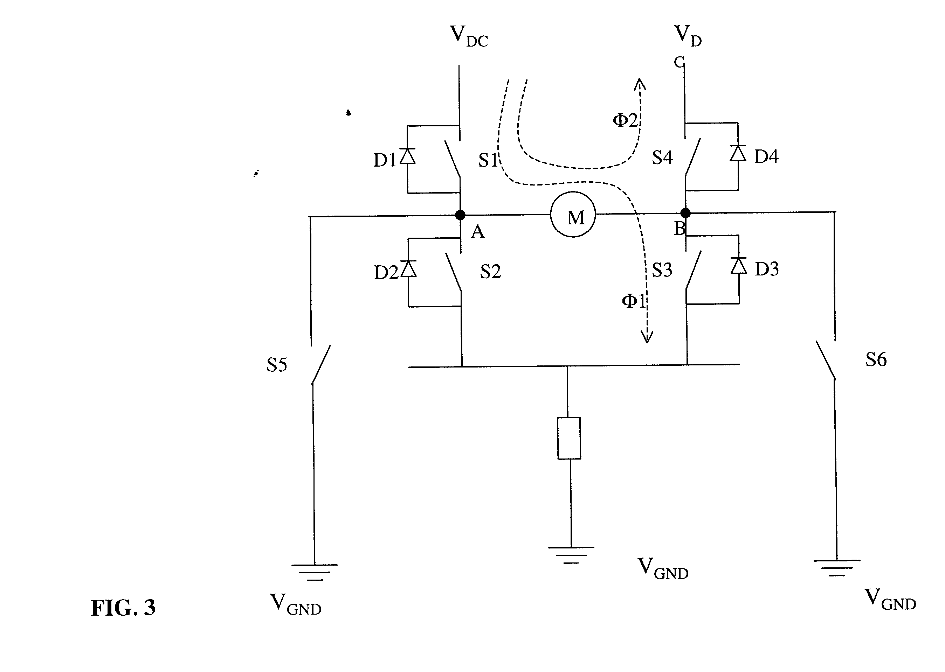

An alternative embodiment, as presented in Fig. 3 is that a sense-resistor for controlling the position of a stepper motor is used in series with switches S2 and S3. In this embodiment both switches S2 and S3 are protected using switches S5 and S6 wich are coupled between the respective terminals A and B of the load i.e. the DC stepper-motor and ground in case the voltage goes beneath ground voltage.

Hence, due to the presence of the sense resistor- which possible represents a significant resistance for measurement purposes, switches S2 and S3 are limited in their capability to counteract a falling voltage on the motorterminals A or B. In that case, switches S5 and S6 migth be needed to limit sufficiently the voltage on terminals A or B and consequently protect switches S2 and S3.

An inductive load can also be present in a switched mode power supply, used in power management or battery management systems. This inductive load can be a physical inductor or the winding of a transformer in case galvanic separation in the powersupply is important.

A final remark is that embodiments of the present invention are partially described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A protection device (PD) for protecting a switching device (SD) adapted to control a current through an inductive load (M) subject to a supply voltage (V_{DC}, V_{GND}) by switching a first and a second terminal (A, B) of said inductive load (M) to the respective pole of said supply voltage (V_{DC}, V_{GND}), said switching device (SD) being controlled by a switching control device (CD), said switching control device (SCD) operating based on a predetermined algorithm said switching device comprising flyback body-diodes, **CHARACTERIZED IN THAT** said protection device (PD) comprises the following parts:
a. a measuring part (MP), adapted to measure a voltage-level on a terminal (A,B) of said load (M);
b. a decision part (DP), adapted to make a decision for switching said first terminal of said load (M) if said voltage-level measured exceeds said supply voltage (V_{DC,} V_{GND}) to counteract said voltage level of said first terminal (A, B); and
c. an instructing part (IP), adapted to instruct said switching control device (SCD) based on said decision for switching a first terminal (A, B) of said load (M), to limit said current through a body diode by counteracting the voltage over said load (M).

2. A protection device (PD) according to claim 1 **CHARACTERIZED IN THAT** said protection device (PD) is a comparator.

3. A protection device (PD) according to claim 1 **CHARACTERIZED IN THAT** said protection device (PD) is implemented using a microprocessor of said switching control device (SCD).

4. A protection device (PD) according to any of the previous claims **CHARACTERIZED IN THAT** said switching device (SD) is a bridge switching configuration with fly-back protection, further **in that** said predetermined algorithm is with high speed alternately coupling a terminal (A, B) of said load (M) to said supply voltage (V_{DC,} V_{GND}) and decoupling said terminal of said load (M) from said supply voltage (V_{DC}, V_{GND}) and **in that** if said terminal is respectively decoupled from said supply voltage (V_{DC}, V_{GND}) said terminal is coupled to an opposite pole of said supply voltage (V_{DC}, V_{GND}) to counteract said voltage-level of said terminal of said load to limit said current through a body diode by counteracting the voltage over said load (M).

5. A protection device (PD) according to claim 4, **CHARACTERIZED IN THAT** said decoupling said terminal of said load (M) from said supply voltage (V_{DC,} V_{GND}) is done gradually and **in that** if said terminal is respectively decoupled from said supply voltage (V_{DC,} V_{GND}) said terminal is coupled to an opposite pole of said supply voltage (V_{DC,} V_{GND}) to counteract said voltage-level of said terminal of said load (M) to limit said current through a body diode by counteracting the voltage over said load (M).

6. A protection device (PD) according to claim 4 and claim 5, **CHARACTERIZED IN THAT** said switching device (SD) is an H-bridge switching configuration.

7. Switching Control device (CD) for controlling a current through an inductive load (M) subject to a supply voltage (V_{DC,} V_{GND}) by switching a first and a second terminal of said inductive load (M) between said supply voltage (V_{DC,} V_{GND}) by a switching device (SD), said switching device (SD) being controlled by a switching control device (CD), said switching control device operating based on a predetermined algorithm, **CHARACTERIZED IN THAT** said switching control device (CD) comprises an instruction interpretation part adapted to interpret an instruction received from a protection device (PD) instructing said switching control device (CD) to limit said current through a body diode by counteracting the voltage over said load (M).

8. Switching Control device (CD) according to claim 7, **CHARACTERIZED IN THAT** said Switching Control device (CD) is adapted to control said switching device (SD) to limit said current through said load device (M) gradually.

9. Packaged Integrated circuit comprising a Switching device and protection device according to any of the claims 1 to 6.

10. Packaged Integrated circuit according to claim 9, **CHARACTERIZED IN THAT** SAID Packaged Integrated circuit additionally comprises a switching control device (CD) according to claim 7 or claim 8.
